Europäisches Patentamt

European Patent Office

Office européen des brevets

(19)

(11) Veröffentlichungsnummer: **0 223 046**
**A2**

(12) # EUROPÄISCHE PATENTANMELDUNG

(21) Anmeldenummer: **86113959.0**

(22) Anmeldetag: **08.10.86**

(51) Int. Cl.⁴: **F 16 K 1/226**, F 16 J 15/32

(30) Priorität: **14.11.85 CH 4886/85**

(43) Veröffentlichungstag der Anmeldung: **27.05.87**
**Patentblatt 87/22**

(84) Benannte Vertragsstaaten: **AT BE DE FR GB IT LU NL**

(71) Anmelder: **SISTAG, Maschinenfabrik Sidler Stalder AG,
Blumenstein, CH-6274 Eschenbach (CH)**

(72) Erfinder: **Sidler, Hans, Hubenfeldstrasse 18,
CH-6274 Eschenbach (DE)**
Erfinder: **Stalder, Hans, Hans La Brigantine,
CH-6274 Eschenbach (DE)**

(74) Vertreter: **Willi, Anton, J., Alsenmattstrasse 2,
CH-8800 Thalwil (CH)**

(54) **Dichtungsvorrichtung.**

(57) In einer Umfangsnut (4) des als drehbare Klappe (2) ausgebildeten Abschlussorgans ist ein mit einer Sitzfläche (7) am Gehäuse (1) zusammenwirkendes erstes Dichtungs-Element (5a) aus relativ hartem gummielastischem Material angeordnet. Ein zweites zwischen erstem Dichtungselement (5a) und Nutboden angeordnetes Dichtungselement (5b) besteht aus weicherem gummielastischem Material. In den Seitenwänden des ersten Dichtungselementes (5a) sind Verbindungskanäle (8) vorgesehen, welche die beiden Seiten der Dichtungsstelle mit dem inneren Nutraum beidseits des zweiten Dichtungselementes (5b) verbinden. Der in Schliesslage auf der einen Seite (Pfeil a) sich erhöhende Mediendruck gelangt über die Kanäle (8) in den inneren Nutraum (4b) und deformiert das zweite Dichtungselement (5b), wodurch das erste Dichtungselement (5a) gegen die Sitzfläche (7) gepresst wird. Öffnen der Klappe (2) bewirkt ein sofortiges Entlasten der Dichtungselemente. Die Klappenbetätigung ist deshalb sehr leichtgängig.

1

SISTAG, Maschinenfabrik
Sidler Stalder AG                    CH-6274 Eschenbach


Beschreibung


Dichtungsvorrichtung

Gegenstand der vorliegenden Erfindung ist eine Dichtungs-Vorrichtung zwischen einem Teil eines einen Mediendurchlass begrenzenden Gehäuses und einem dazu beweglichen Durchlass-Abschlussorgan, wobei in einer Nut der einen dieser beiden Teile eine Dichtung aus gummielastischem Material eingesetzt ist, die dazu bestimmt ist, mit einer Dichtungsauflage am andern Teil eine Dichtungsstelle zwischen zwei Gehäusepartien unterschiedlichen Drucks zu bilden.

Solche Dichtungsvorrichtungen können z.B. zwischen einem den Mediendurchlass begrenzenden Wandteil des Gehäuses und dem Schliessrand einer drehbaren Abschlussklappe oder zwischen einem Führungswandteil des Gehäuses und der darin geführten Wand einer Schieberplatte vorgesehen sein. In all diesen Fällen herrschen beidseits der Dichtungsstelle in Wirkungslage der Teile der Dichtungsvorrichtung unterschiedliche Druckverhältnisse. Ein wesentlicher Nachteil der bekannten Dichtungsvorrichtungen besteht darin, dass sie sowohl im druckbelasteten als auch im unbelasteten Zustand ihre Dichtwirkung nur dank geeigneter Dimensionierung erzielter Anpressung des in der Nut abgestützten Dichtelementes an die Auflagefläche erreichen. Dies führt zwangsläufig zu relativ schwergängiger Bewegbarkeit des Abschlussorgans in bzw. aus seiner Abschlusslage und zu relativ grossem Verschleiss des Dichtungselementes. Die vorliegende Erfindung bezweckt deshalb die Schaffung einer Dichtungsvorrichtung der genannten Art, die sowohl im druckbelasteten als auch im unbelasteten Zustand eine relativ leichtgängige Betätigung des Abschlussorgans ermöglicht, ohne dass die Dichtwirkung in Schliesslage des Abschlussorgans beeinträchtigt ist. Sie soll im Gegenteil sicherstellen, dass ihre Dichtwirkung mit der einseitigen Druckbelastung zunimmt.

Zu diesem Zweck ist die erfindungsgemässe Dichtungs-Vorrichtung dadurch gekennzeichnet, dass die Dichtung aus einem ersten im Bereich der Nutöffnung angeordneten Dichtungselement und einem zweiten zwischen diesem ersten Dichtungselement und dem Nutboden angeordneten Dichtungselement besteht, wobei wenigstens auf der dem grösseren Druck ausgesetzten Seite der Dichtungsstelle zwischen Nutwand und erstem Dichtungselement wenigstens ein von dieser Druckseite bis in den das zweite Dichtungselement enthaltenden Nutraum führender Verbindungskanal vorgesehen ist.

Dank dieser Bauart wird in Schliesslage des Abschluss-Organs von der Seite höheren Drucks durch den genannten Kanal im das zweite Dichtungselement enthaltenden Nutraum ein gegenüber dem in Offenlage des Abschlussorgans hier herrschenden Druck erhöhter Druck aufgebaut, der über

0223046

dieses zweite Dichtungselement auf das erste Dichtungs-Element wirkt, sodass das letztere im Sinne des Austretens aus der Nutöffnung belastet und damit gegen die Dichtungsauflage am andern Gehäuse teilgepresst wird. Beim Betätigen des Abschlussorgans im Sinne des Schliessens wird dieser erhöhte Druck erst unmittelbar bei Erreichen der Schliesslage aufgebaut, sodass während dieser Betätigung keine z.B. durch Vorspannung der Dichtung erzeugte Reibung der Dichtung an der Dichtungs-Auflage überwunden werden muss. Analoges gilt beim Betätigen des Abschlussorgans aus seiner Schliesslage; da schon im ersten Stadium des Oeffnens der Druck auf der Seite höheren Drucks sinkt, was über den Verbindungskanal ein entsprechendes Absinken des Drucks im inneren Nutraum bewirkt, wird gleichzeitig das erste Dichtungselement entlastet, was ein entsprechend leichtgängiges Betätigen des Abschlussorgans im Sinne des Oeffnens gestattet.

Zweckmässig sind über die ganze Länge der Dichtung verteilt mehrere der genannten Verbindungskanäle vorgesehen; um zu erreichen, dass z.B. für wechselnde Durchflussrichtung des Mediums im Gehäuse bzw. unabhängig davon auf welcher Seite der Dichtungsstelle sich der höhere Druck einstellt, die gleiche Dichtungsvorrichtung verwendbar ist, ist der bzw. die genannten Verbindungskanäle zweckmässig von beiden Seiten der Dichtungsstelle her in den durch das zweite Dichtungselement in zwei Kammern getrennten Nutraum geführt. Besonders vorteilhaft ist die Verwendung dieser Dichtungsvorrichtung bei drehbaren Abschlussklappen in Rohrleitungen, wobei die Nut mit ihrer Dichtung zweckmässig am Schliessrand der Abschlussklappe vorgesehen ist. Der bzw. die genannten Verbindungskanäle sind zweckmässig im ersten Dichtungselement selbst und nicht in der metallischen Nutwand geformt. Aber auch bei Plattenschiebern kann die erfindungsgemässe Dichtungs-

Vorrichtung z.B. als Querdichtung verwendet werden; in diesen Fällen ist die die Dichtungselemente enthaltende Nut zweckmässig in die Schieberplatte führenden Gehäuse vorgesehen.

Anhand der beiliegenden Zeichnung ist die Erfindung im folgenden beispielsweise beschrieben; in der Zeichnung zeigt :

Fig. 1   im Axialschnitt ein Teil eines Klappenventils mit drehbarer Abschlussklappe im drucklosen Zustand,

Fig. 2   eine Draufsicht zu Fig. 1,

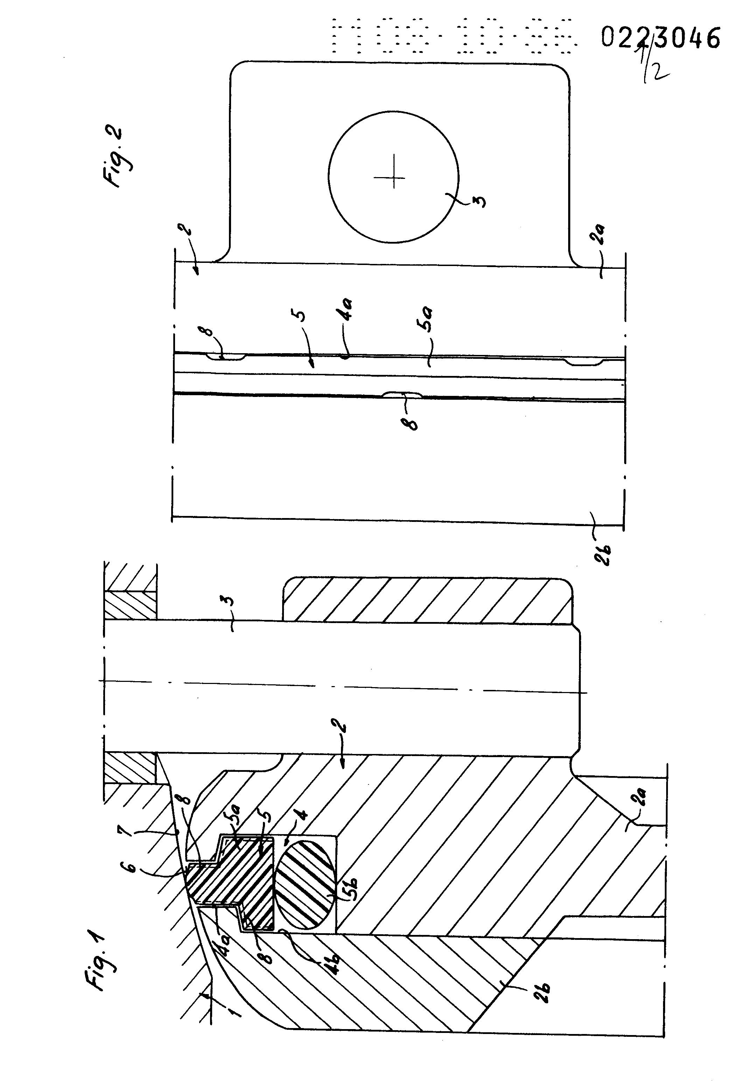

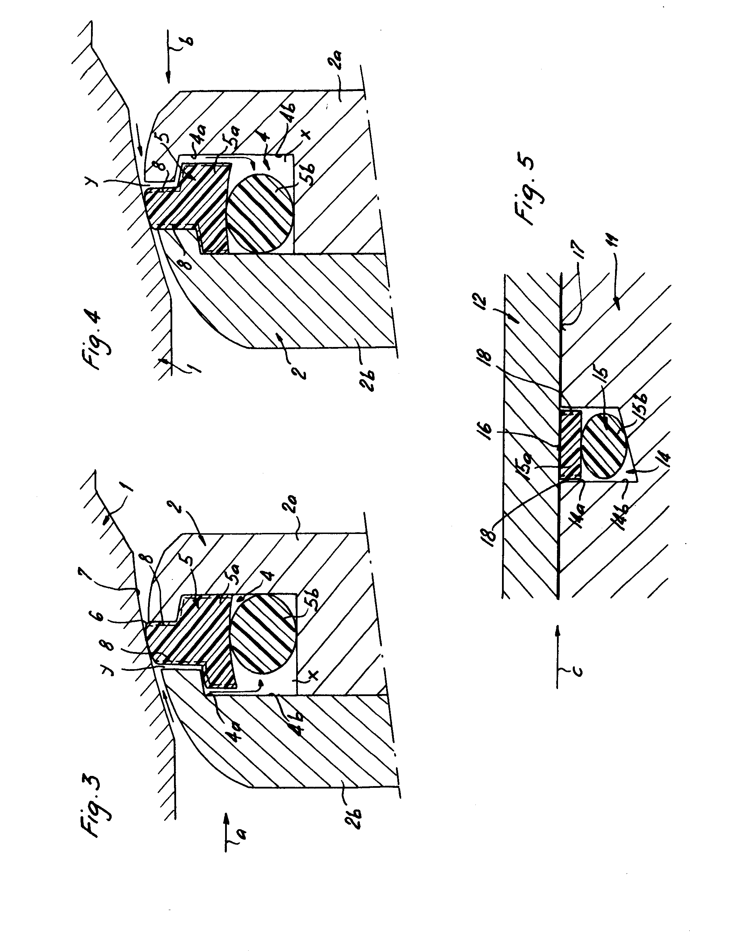

Fig. 3
und 4   die Dichtungsvorrichtung des Beispiels nach Fig. 1 und 2 bei auf unterschiedlichen Seiten der Dichtungsstelle herrschendem höheren Druck, und

Fig. 5   im Axialschnitt durch einen Plattenschieber mit Querdichtung.

In den Fig. 1 und 2 ist mit 1 das Klappenventilgehäuse, mit 2 die drehbare Klappe und mit 3 der eine der beiden miteinander fluchtenden, im Gehäuse 1 gelagerte Drehzapfen der Klappe 2 bezeichnet. Die Klappe 2 ist aus zwei fest miteinander verschraubten Scheiben 2a und 2b gebildet. Durch entsprechende Ausnehmungen auf den einander zugekehrten Seiten der Scheibenränder ist eine hinterschnittene Umfangsnut 4 geschaffen. Im die verengte Nutöffnung umfassenden radial äusseren Nutraum 4a ist ein der Nuthinterschneidung entsprechend geformtes erstes Dichtungselement 5a aus gummielastischem Material angeordnet. Die im Querschnitt nach aussen gewölbte oder in anderer Weise beidseitig abgeschrägte Dichtungsfläche 6 des Dichtungelementes 5a ragt geringfügig über die Umfangsfläche der Klappe 2 hinaus, sodass sie wie in Fig. 1 gezeigt, in Schliesslage der Klappe 2 an der Sitzfläche 7 des kein Medium führenden Gehäusedurchlasses praktisch druckfrei anliegt. In dieser Einbaulage ist das Dichtungselement 5a durch ein ebenfalls aus gummielastischem Material bestehendes zweites Dichtungselement 5b gehalten, das im zwischen Nutboden und Innenfläche des ersten Dichtungselementes verbliebenen Nutraum 4b angeordnet ist.

Das Dichtungselement 5b besteht zweckmässig aus einem weicheren, und damit leichter deformierbaren Material als das Dichtungselement 5a, dessen Material im Zusammenwirken mit der Sitzfläche 7 möglichst geringe Reibung und damit grosse Verschleissfestigkeit aufweisen soll. Der Querschnitt des Dichtungselementes 5b ist in jedem Fall kleiner als jener des dieses Dichtungselement aufnehmenden Nutraums 4b und beispielsweise wie in Fig. 1 gezeichnet zweckmässig elliptisch, wobei die grössere Querschnittachse höchstens gleich oder wie gezeigt, kleiner ist als die entsprechende axparallele Breite dieses Nutraums 4b, während die kleinere Querschnittachse dieses Dichtungs-Elementes 5b mindestens gleich oder etwas grösser ist, als der Radialabstand der hier zueinander parallelen, den Querschnitt des Nutraumes 4b begrenzenden Querschnittlinien des ersten Dichtungselementes 5a und des Nutbodens. Damit ist gewährleistet, dass die in Axrichtung beidseits des Dichtungselementes 5b von diesem nicht ausgefüllten Nutraumpartien voneinander vollständig getrennt sind. Selbstverständlich könnte das Dichtungselement 5b auch Kreisquerschnitt aufweisen, sofern der Kreisdurchmesser gleich oder etwas grösser als der vorstehend genannte Radialabstand und höchstens gleich oder kleiner als die axiale Nutraumbreite ist.

Das annähernd passend oder mit kleinem Spiel in den die
Nutöffnung aufweisenden radial äusseren Nutraum 4a
eingesetzte Dichtungselement 5a ist an beiden den Nutwänden
zugekehrten Seitenflächen mit einem Kranz von gleichmässig
über den Klappenumfang verteilt angeordneten, vom Rand der
Dichtungsfläche 6 bis in den das Dichtungselement 5b
enthaltenden Nutraum 4b führenden Verbindungskanälen 8
versehen, wobei die Kanäle 8 der beiden Kanalkränze in
Umfangsrichtung zueinander versetzt sind.

Die Arbeitsweise der beschriebenen Dichtungsvorrichtung
am Klappenventil ergibt sich aus den Fig. 3 und 4. Gemäss
Fig. 3 ist angenommen, dass in Schliesslage der Klappe 2
auf der mit Pfeil a bezeichneten Seite der Dichtungsstelle
im Gehäusedurchlass ein höherer Mediumdruck herrsche als
auf der andern Seite. Dieser Druck wird durch die auf
dieser Seite des Dichtungselementes 5a im letzteren
vorgesehenen Verbindungskanäle 8 auf der mit x bezeichneten
Seite des radial inneren Dichtungselementes 5b in den
inneren Nutraum 4b übertragen. Er bewirkt dadurch
einerseits unter Oeffnung eines kleinen Spaltes y zwischen
der Nutwand der Klappenscheibe 2b und dem Dichtungselement
5a ein Anpressen dieses Elementes an die gegenüberliegende
Nutwand der Klappenscheibe 2a und anderseits auch ein
Verschieben des radial inneren Dichtungselementes 5b gegen
diese Nutwand unter gleichzeitiger Deformation dieses
Dichtungselementes 5b im Sinne einer Vergrösserung seiner
radialen Abmessung; dies hat ein radiales Anpressen der
Dichtungsfläche 6 des Dichtungselementes 5a an die
Sitzfläche 7 des Gehäuses 1 und damit einen dichten
Abschluss des Durchlasses zur Folge. Beim Betätigen der
Klappe 2 im Sinne des Oeffnens und entsprechendem
Wegbewegen der Dichtungsfläche 6 von der Sitzfläche 7
erfolgt an der Dichtungsstelle sofort ein Druckausgleich,
wodurch beide Dichtungselemente 5a und 5b sofort entlastet

0223046

werden. Entsprechend ist während der weiteren Oeffnungs-Bewegung der Klappe 2 der Anpressdruck zwischen Dichtungsfläche 6 und der Sitzfläche 7 aufgehoben. Wie Fig. 4 zeigt, ist diese Wirkungsweise der Dichtungs-Vorrichtung analog, wenn in Schliesslage der Klappe 2 der höhere Druck auf der anderen, durch Pfeil b angedeuteten Seite der Dichtungsstelle herrscht. Umgekehrt kann (in beiden Fällen) die Klappe 2 bei entlasteten, da beidseitig über die beiden Kränze von Verbindungskanälen 8 vom gleichen (niederen) Druck beaufschlagten Dichtungselementen 5a, 5b leichtgängig bis unmittelbar an die Dichtungslage heran bewegt werden. Der höhere Druck auf der einen Seite der Dichtungsstelle baut sich erst auf, wenn die Dichtungsfläche 6 des Dichtungselementes 5b zum Anliegen an die Sitzfläche 7 gebracht ist; dieser erhöhte Druck bewirkt über die dieser Durchlassseite zugeordneten Verbindungskanäle 8 die vorangehend beschriebene Deformation des Dichtungselementes 5b unter entsprechendem Anpressen der Dichtungsfläche 6 des Dichtungselementes 5a an die Sitzfläche 7 des Gehäuses.

Die beidseitige Anordnung von Verbindungskanälen 8 ermöglicht die Verwendung der gleichen Dichtungsvorrichtung für Klappenventile unterschiedlicher Durchflussrichtungen. Es ist aber natürlich auch möglich, nur einseitig solche Verbindungskanäle vorzusehen, sofern der Einbau so erfolgt, dass diese Kanäle in Schliesslage der Klappe auf der Seite höheren Drucks liegen. Grösse, Querschnittsform und Anzahl dieser Kanäle können selbstverständlich den Anforderungen entsprechend frei gewählt werden. Das Anbringen der Verbindungskanäle am Dichtungselement 5b hat sich bezüglich Herstellung als besonders vorteilhaft erwiesen; es versteht sich aber, dass diese Kanäle auch direkt in den betreffenden Nutwänden selbst vorgesehen sein könnten.

Beim vorangehend beschriebenen Beispiel ist die Nut mit der Dichtung am beweglichen Abschlussorgan vorgesehen, während die Anliegefläche am Gehäuse vorgesehen ist. Es ist aber auch eine umgekehrte Anordnung möglich. Ein solches Beispiel ist in Fig. 5 dargestellt. Mit 11 ist hier ein Schiebergehäuse bezeichnet, in welchem eine Schieberplatte 12 geführt ist, wobei Gehäuse und Platte durch eine Querdichtung nach aussen abgedichtet sind. Mit Pfeil c ist die dem nicht gezeichneten Durchlass des Schiebergehäuses 11 zugekehrte Seite der Querdichtung bezeichnet. In der der Schieberplatte 12 zugekehrten Gehäusewand ist eine Nut 14 vorgesehen, die im Bereich 14a der Nutöffnung ein zum Zusammenwirken mit der Schieberplatte 12 bestimmtes erstes Dichtungselemment 15a aus relativ hartem gummielastischem Material angeordnet ist. Im zwischen diesem Dichtungselement 15a und dem von der Druckseite (Pfeile) her gegen die Schieberplatte 12 hin geneigten Nutboden liegenden Nutraum 14b ist ein im Querschnitt elliptisches zweites Dichtungselement 15b aus gegenüber dem Material des Dichtungselementes 15a weicherem gummielastischem Material enthalten. In den den Nutwänden zugekehrten Schmalseiten des Dichtungselementes 15a sind in Abständen und versetzt zueinander Verbindungskanäle 18 vorgesehen, die den zwischen der Anliegefläche 17 der Schieberplatte 12 und der Führungsfläche des Gehäuses 11 unvermeidbaren aber engen Spalt mit dem das Dichtungselement 15b enthaltenden Nutraum 14b verbinden. Die Anordnung ist so getroffen, dass bei fehlendem oder geringem Ueberdruck auf der mit Pfeil c angedeuteten Seite der Dichtungsstelle, z.B. in Offenlage der Schieberplatte 12 das Dichtungselement 15b praktisch druckfrei am Dichtungselement 15a und am Nutboden anliegt, während anderseits die Dichtungsfläche 16 des Dichtungselementes 15a ebenfalls praktisch druckfrei gegen die Anliegefläche 17 der Schieberplatte 12 anliegt. Demzufolge kann die Schieberplatte 12 relativ leichtgängig im Sinne des Schliessens betätigt werden. Erst wenn die Schieberplatte 12 ihre Schliesslage (im Zusammenwirken mit einer entsprechenden Dichtung) erreicht hat, tritt auf der Zuflussseite des Durchlasses ein gegenüber der Aussenseite der Querdichtung meist erheblich erhöhter Druck auf. Dieser in Pfeilrichtung c wirkende Druck wird über die entsprechenden Verbindungskanäle 18 in den Nutraum 14b übertragen; dies hat eine entsprechende Deformation des Dichtungselementes 15b zur Folge, welches seinerseits das Dichtungselement 15a mit seiner Dichtungsfläche 16 gegen die Plattenfläche 17 presst. Die Querdichtung ist damit voll wirksam. Da beim Oeffnen der Schieberplatte 12 der Druck aus Pfeilrichtung c sofort sinkt, werden auch die Dichtungselemente 15b und 15a wieder entlastet und die Schieberplatte 12 lässt sich entsprechend leichtgängig in ihre vollständige Offenlage bewegen.

Die erfindungsgemässe Dichtungsvorrichtung ermöglicht somit ein besonders leichtgängiges Betätigen des Abschlussorgans. Eine Vorspannung der Dichtung ist nicht erforderlich und ihr Verschleiss kann sehr gering gehalten werden, während anderseits die Dichtwirkung in Schliesslage des Abschlussorgans optimal ist,denn je grösser der auf das zweite, innere Dichtungselement wirkende Mediumdruck ist, umso grösser ist die Anpressung des ersten, äusseren Dichtungselementes.

Patentansprüche

1. Dichtungsvorrichtung zwischen einem Teil eines einen Mediendurchlass begrenzenden Gehäuses (1; 11) und einem dazu beweglichen Durchlass-Abschlussorgan (2; 12), wobei in einer Nut (4; 14) des einen dieser beiden Teile eine Dichtung (5; 15) aus gummielastischem Material eingesetzt ist, die dazu bestimmt ist, mit einer Dichtungsauflage (7; 17) am andern Teil eine Dichtungsstelle zwischen zwei Gehäusepartien unterschiedlichen Drucks zu bilden, dadurch gekennzeichnet, dass die Dichtung aus einem ersten im Bereich der Nutöffnung angeordneten Dichtungselement (5a; 15a) und einem zweiten zwischen diesem ersten Dichtungselement und dem Nutboden angeordneten Dichtungselement (5b; 15b) besteht, wobei wenigstens auf der dem grösseren Druck ausgesetzten Seite der Dichtungsstelle zwischen Nutwand und erstem Dichtungselement (5a; 15a) wenigstens ein von dieser Druckseite bis in den das zweite Dichtungselement (5b; 15b) enthaltenden Nutraum (4b; 14b) führender Verbindungskanal (8; 18) vorgesehen ist.

2. Dichtungsvorrichtung nach Anspruch 1, dadurch gekennzeichnet, dass das erste Dichtungselement (5a; 15a) aus härterem gummielastischem Material besteht als das zweite Dichtungselement (5b; 15b).

3. Dichtungsvorrichtung nach Anspruch 1 oder 2, dadurch gekennzeichnet, dass das erste Dichtungselement (5a; 15a) wenigstens annähernd passend in den Oeffnungs-Bereich (4a; 14a) der Nut (4; 14) eingesetzt ist, während die Breite des zweiten Dichtungselements (5b; 15b) kleiner ist als die Breite des dieses Dichtungselement enthaltenden Nutraums (4b; 14b).

4. Dichtungsvorrichtung nach einem der Ansprüche 1 bis 3, dadurch gekennzeichnet, dass das erste Dichtungselement (5a; 15a) auf beiden Seiten mit mehreren über die Dichtungslänge verteilt angeordneten Verbindungskanälen (8; 18) versehen ist, wobei die Kanäle der einen Seite zu den Kanälen der andern Seite versetzt sind.

5. Dichtungsvorrichtung nach einem der Ansprüche 1 bis 4, dadurch gekennzeichnet, dass das zweite Dichtungselement (4b; 14b) elliptischen oder kreisförmigen Querschnitt aufweist.

6. Dichtungsvorrichtung nach einem der Ansprüche 1 bis 5, wobei das Abschlussorgan eine drehbare Klappe (2) ist, dadurch gekennzeichnet, dass die die beiden Dichtungselemente (5a, 5b) enthaltende Nut (4) am Klappenumfang vorgesehen ist, wobei das erste Dichtungselement (5a) in einem hinterschnittenen Nutraum (4a) gehalten ist.

Fig. 1

Fig. 2

0223046

Fig.3

Fig.4

Fig.5